# EUROPÄISCHE PATENTANMELDUNG

(11) **EP 3 771 148 A1**
(43) Veröffentlichungstag der Anmeldung: **27.01.2021**
(21) Anmeldenummer: 19188242.2
(22) Anmeldetag: 25.07.2019
(51) Int. Cl.: H04L 12/24, G06F 9/455

(54) **VERFAHREN ZUM AUTOMATISCHEN KONFIGURIEREN, CLUSTER-ARBEITSKNOTEN, CLUSTER, NETZWERK, COMPUTERPROGRAMM UND COMPUTERLESBARES MEDIUM**

(71) Anmelder: Siemens Aktiengesellschaft, 80333 München (DE)
(72) Erfinder: Albrecht, Harald, 90475 Nürnberg (DE); Höme, Stephan, 91126 Schwabach (DE); Talanis, Thomas, 91336 Heroldsbach (DE)

(57) **Zusammenfassung**

Die Erfindung betrifft ein Verfahren zum automatischen Konfigurieren eines Arbeitsknotens (1) eines Clusters (2), bei dem
- von einem Agenten-Kontroll-Modul (7) erfasst wird, welche physikalischen Schnittstellen (3) der Arbeitsknoten (1) aufweist, wobei der Arbeitsknoten (1) einen Host-Netzwerk-Stack (8) und einen oder mehrere weitere Netzwerk-Stacks (9, 10) aufweist, und sowohl der Host-Netzwerk-Stack (8) als auch der oder die weiteren Netzwerk-Stacks (9, 10) auf das Vorhandensein von physikalischen Schnittstellen (3) überprüft werden, und
- das Agenten-Kontroll-Modul (7) für den Fall, dass wenigstens eine physikalische Netzwerkschnittstelle (3) erstmalig erfasst wird oder von einem Netzwerk-Stack (8-10) entfernt und einem andern Netzwerk-Stack (8-10) zugeordnet wird, für diese oder für den Netzwerk-Stack (8-10), zu dem diese gehört, bei Bedarf automatisch wenigstens einen Nachbar-Detektions-Agenten (17) vorsieht, der ausgebildet und/oder eingerichtet ist, um wenigstens ein Protokoll bereitzustellen, welches die Erfassung der Netzwerktopologie ermöglicht.

Darüber hinaus betrifft die Erfindung einen Cluster-Arbeitsknoten (1), ein Netzwerk, ein Computerprogramm und ein computerlesbares Medium.

## Beschreibung

Die Erfindung betrifft ein Verfahren zum automatischen Konfigurieren eines Arbeitsknotens eines Clusters. Darüber hinaus betrifft die Erfindung einen Cluster-Arbeitsknoten, einen Cluster, ein Netzwerk, ein Computerprogramm und ein computerlesbares Medium.

IT-Technologien für den Betrieb von Clustern ermöglichen es, vergleichsweise einfach und flexibel Arbeitsaufgaben (Arbeitslasten) in einem Cluster von "gleichartigen" Arbeitsknoten, etwa Arbeitsrechner, zu verteilen.

Im Bereich der allgemeinen IT hat sich die so genannte Container-Technologie bewährt. Software- bzw. Anwendungs-Container, vorliegend auch kurz als Container bezeichnet, stellen in der Regel "abgekapselte" Einheiten dar, die unabhängig voneinander ausgeführt werden können, egal wo sie sich befinden. Ähnlich wie bei virtuellen Maschinen sind Container eine Art Behälter für Anwendungen, in denen diese laufen können. Während virtuelle Maschinen jedoch eine ganze Computerumgebung abbilden, enthalten die Container üblicherweise lediglich die wichtigen Daten, die für die Ausführung der jeweiligen Anwendung bzw. Anwendungen benötigt werden.

Die Container-Technologien bzw. die Containerisierung ermöglichen es insbesondere, eine Software bzw. Anwendung in einem Container zu verpacken, der alles umfasst, was sie zum Laufen braucht, beispielsweise Programmcode, Laufzeit, System-Tools und/oder Systembibliotheken. Die Container-Technologien bzw. Containerisierung erlauben es, Funktionen einfach und bequem modular zu verpacken, zu transportieren und schließlich in den operativen Bereich auszurollen. Klassische Einsatzgebiete von Containern liegen beispielsweise darin Applikationen, etwa eine Datenbank oder einen Web-Front-End, bequem zu verpacken.

Beispiele für Software für die Container-Virtualisierung/Containerisierung sind etwa "Docker" oder "rkt" (gesprochen "rocket", siehe etwa https://coreos.com/rkt/sowie https://www.docker.com bzw. EP 3 267 351 A1 zu Docker). Ein Beispiel für ein Orchestrierungssystem/-tool bzw. eine Orchestrierungs-Software für Container ist durch "Kubernetes" gegeben (siehe etwa https://kubernetes.io/ sowie https://de.wikipedia.org/wiki/Kubernetes)

Mit Container-Orchestrierungs-Systemen wie beispielsweise Kubernetes können Container bzw. sogenannte "Pods" orchestriert werden, welche die kleinste einsetzbare Einheit darstellen. Pods sind die Arbeiterprozesse, die auf Cluster-Arbeitsknoten, die auch als "Nodes" bezeichnet werden, laufen. Ein Arbeitsknoten/Knoten/Node (Begriffe werden vorliegend synonym verwendet) kann beispielsweise durch eine physische oder auch virtuelle Maschine eines Clusters gegeben sein.

Mittels der Orchestrierungs-Systeme bzw. -Tools wie Kubernetes können die Arbeitslasten in Form von Software-Containern bzw. Pods auf die verfügbaren Arbeitsknoten eines Clusters verteilt werden. Weiterhin kann auch die Container- und Knotenverfügbarkeit überprüft werden und beispielsweise gestörte Container können automatisch neu gestartet werden.

Der Cluster mit seinen Arbeitsknoten wird dabei in der Regel von wenigstens einem Controller bzw. Master gesteuert, im Falle von Kubernetes über wenigstens einen sogenannten "Kubernetes-Master". Die Arbeitsknoten eines Clusters können räumlich verteilt angeordnet sein.

Nach Auffassung der Anmelderin hat die Verwendung von Clustern und die Möglichkeit, Arbeitslasten auf Arbeitsknoten solcher in Form von Containern/Pods zu verteilen auch im industriellen Bereich, insbesondere im Bereich der industriellen Automatisierungstechnik Potential.

Besondere Herausforderungen treten auf, wenn Cluster-Technologien der IT über diesen ursprünglichen Anwendungsbereich hinaus auf die Automatisierungstechnik übertragen werden. Einerseits bei der Erweiterung von Clustern um Industrial Edges als Arbeitsknoten, weil nun ein Teil der Arbeitsknoten nicht nur Teil des Clusternetzes sind, sondern auch weiterhin Teil verschiedener Anlagennetzwerke in möglicherweise verschiedenen Kunden-Anlagen. Andererseits, wenn für eine virtuelle Inbetriebsetzung von industriellen Kommunikationsnetzen und für digitale Abbilder von Anlagennetzwerken diese in industriellen Clustern dynamisch zusätzlich zum eigentlichen Cluster-Netzwerk hinzukommen.

In solchen Fällen ist ein vollständig vorgeplantes und statisch ausgeführtes Cluster-Netzwerk nicht mehr allein ausreichend. Gängige Plugin-Erweiterungen erlauben es beispielsweise, jederzeit in einem Cluster neue Netzwerke anzulegen und wieder zu entfernen und diese bis hinunter auf die Ebene einzelner Pods (=kleinste Container-Gruppen) gezielt bereitzustellen. Hierbei können einzelne Arbeitslasten im Cluster die jeweils von ihnen benötigten Netzwerke innerhalb gewisser Rahmenbedingungen selbst einrichten und verschalten. Weiterhin können verschiedene Arbeitslasten (wie digitale Abbilder, Industrial Edge Applikationen, und dergleichen mehr) gleichzeitig im gleichen Cluster abgearbeitet werden, wobei sich die konkreten Arbeitslasten zudem über die Zeit hinweg verändern.
Damit existiert kein vorab durchgeplanter und danach strikt genauso ausgeführter "Gesamtplan" mehr für die Konfiguration des Clusters.

Es existieren bislang nur allenfalls optionale "Standards", wie die Netzwerkkonfigurationen von Clustern hinterlegt werden können, beispielsweise CNI Container Network Interface (siehe z.B.: https://github.com/containernetworking/cni) oder Multus mit dynamischer Vernetzung (siehe beispielsweise https://github.com/intel/multus-cni). Diese Standards sind zudem nur an bestimmten Anwendungsfällen ausgerichtet und deshalb oftmals nur beschränkt oder gar nicht in einem industriellen Cluster einsetzbar.

Die Anmelderin geht davon aus, dass sich Anwender und Sicherheitsexperten daher Werkzeuge zur Diagnose und Überwachung der Kommunikation in Clustern - und zwar auf verschiedenen Ebenen des ISO/OSI-Schichtenmodells, so auch auf den Schichten 2 (zur Topologie einzelner Links), IPSchicht 3 und Transportschicht 4 wünschen werden. Dabei sollte einerseits ein rascher Überblick über die aktuell aktiven Netzstrukturen in einem Cluster und andererseits bei Bedarf Einblick in Details erhalten werden können.

Ein Teilaspekt ist hierbei, die Netzwerkstruktur zwischen(!) den einzelnen Arbeitsknoten zu erfassen und dies in einer technisch und auch organisatorisch vorteilhaften Form zu bewerkstelligen, die der Dynamik von Clustern in Bezug auf deren Self-Service und modulare Konfiguration Rechnung trägt. Insbesondere muss hier bei der Situation in industriellen Clustern dem Umstand Rechnung getragen werden, dass die Anbindung einzelner Arbeitsknoten beispielsweise über vermaschte Overlays (wie VPN, ...) erfolgt und gleichzeitig mehre, voneinander isolierte Anlagennetze bzw. Anlagennetzsegmente an die verschiedenen Arbeitsknoten herangeführt werden.

Für das Erfassen der Netzwerk-Topologie - beispielsweise in Form von Nachbarschaftsbeziehungen - sind folgenden Mechanismen bekannt:
Geräte-Welt: die einzelnen Geräte (wie beispielsweise heutige Profinet-Geräte) werden hierbei mit dem oder den für eine Topologie-Erkennung erforderlichen Protokollen und der dazugehörigen Software ausgestattet. In der Regel wird zumindest der IEEE-Standard 802.1AB "LLDP" eingesetzt, oftmals zusätzlich auch noch SNMP (Simple Network Management Protocol, siehe beispielsweise die Requests for Comments der IETF RFC 1901, 1905 und 1906). Während LLDP das gegenseitige Übermitteln von Systeminformationen zwischen direkt durch einen Link benachbarten Geräten bewerkstelligt, ermöglicht SNMP das Auslesen dieser in den Geräten gelernten Informationen über ihre jeweiligen Nachbarn über das Netz hinweg.

Virtuelle VM-Welt: hierbei wird analog zur bisherigen physikalischen Gerätewelt die VM mit den erforderlichen Protokollen und Software ertüchtigt. Prinzipiell kann dabei die nötige Software entweder "traditionell" in Form von Betriebssystem-Paketen installiert (und integriert) werden oder "moderner" in Form eigenständiger Container. Dabei isolieren diese Container zwar ihre Software-Pakete und Prozesse innerhalb der VM, benutzen jedoch den sogenannten "Host-IP-Stack" des Betriebssystems in der VM.

Virtuelle Container- und Cluster-Welt: sofern physikalische (entsprechend "virtuell-physikalische") Netzwerkschnittstellen auch einzelnen Containern oder Pods und nicht dem Host/VM zugewiesen sind, müssen die betreffenden Container/Pods um die benötigte Funktionalität erweitert werden. Dafür sind der Anmelderin verschiedene Wege bekannt:
1. Bau neuer Container-Images, die ein existierendes Container-Image um die zusätzliche Software für die Nachbarschaft-Protokolle erweitert. Dieses Vorgehen erachtet die Anmelderin als mitunter nachteilig, da praktisch "Äpfel und Birnen" zusammen in ein gemeinsames Image gebracht werden und gerade die Vorteile von Containern in Form von Modularität und Entkopplung nicht mehr gewährleistet sind.
2. Erweitern existierender Pod-Definitionen (sogenannte Pod-Spezifikationen/-Schablonen) um einen zusätzlichen Container mit der erforderlichen Software für die Nachbarschafts-Protokolle. Im Vergleich zum Vorgehen Nr. 1 wird hierbei das Vermischen von "Software-Äpfeln und -Birnen" in einem Container vermieden. Nachteilig ist jedoch, dass man hierbei Pod-Definitionen sozusagen am Eingang eines Clusters anpassen muss, also beim Installieren von Arbeitslasten in den Cluster.
3. Der bekannte Sidecar-Mechanismus automatisiert den Prozess, einem Pod einen weiteren Container beizufügen, wobei das Hinzufügen zu einem möglichst späten Zeitpunkt erfolgt, nämlich erst, wenn ein Pod neu angelegt wird, um ihn danach einem Arbeitsknoten zuzuweisen. Hierbei werden also nicht die Schablonen modifiziert, sondern die einzelnen konkreten Pods. Das Hinzufügen kann jedoch nicht mehr später zur Laufzeit eines Pods erfolgen, sondern nur genau zum Erzeugungszeitpunkt. Außerdem muss zum Erzeugungszeitpunkt bereits bekannt sein, welche physikalischen Netzwerkschnittstellen dem Pod (später!) zur Laufzeit zugewiesen werden. Es wird somit wenig Flexibilität geboten.
4. Container/Orchestration Engine Hooks (siehe https://kubernetes.io/docs/concepts/containers/containerlifecycle-hooks/), bei denen auf bestimmte, vordefinierte Ereignisse in bestimmten Lebensphasen eines Containers geachtet wird. Die Hooks sind dabei aber Teil des Containers. Zudem betreffen diese Hooks nicht den Lebenszyklus der Kommunikationsanbindung von Containern. Auch ist zu beachten, dass sie lediglich einen Container selbst über seinen gerade erfolgten Start ("PostStart") und sein bevorstehendes Ende ("PreStop") benachrichtigen können.

Zusätzlich wird die Situation dadurch verkompliziert, dass auf den Arbeitsknoten (eines industriellen Clusters) gleichzeitig sowohl orchestrierte Pods (mit deren Containern) als auch eigenständige Container und eigenständige Prozesse eingesetzt werden können, denen je nach Aufgabe und Konfiguration unterschiedliche physikalische Netzwerkschnittstellen zugewiesen werden können.

Ausgehend davon ist es eine Aufgabe der vorliegenden Erfindung, eine Möglichkeit zu schaffen, die Netzwerkstruktur zwischen den einzelnen insbesondere in einem industriellen Netzwerk vorgesehenen Arbeitsknoten eines Clusters zu erfassen.

Diese Aufgabe wird gelöst durch ein Verfahren zum automatischen Konfigurieren eines Arbeitsknotens eines Clusters, wobei der Arbeitsknoten an einem Netzwerk teilnimmt und dem Arbeitsknoten von einem Orchestrierungs-System Arbeitslasten in Form von Software-Containern zugewiesen sind und/oder werden, bei dem
- von einem dem Arbeitsknoten zugeordneten Agenten-Kontroll-Modul erfasst wird, welche physikalischen Schnittstellen der Arbeitsknoten aufweist, wobei der Arbeitsknoten einen Host-Netzwerk-Stack und einen oder mehrere weitere Netzwerk-Stacks aufweist, und sowohl der Host-Netzwerk-Stack als auch der oder die weiteren Netzwerk-Stacks auf das Vorhandensein von physikalischen Schnittstellen überprüft werden, und
- das Agenten-Kontroll-Modul für den Fall, dass wenigstens eine physikalische Netzwerkschnittstelle erstmalig erfasst wird oder von einem Netzwerk-Stack entfernt und einem anderen Netzwerk-Stack zugeordnet wird, erfasste Schnittstelle, für die wenigstens eine erfasste Schnittstelle oder für den Netzwerk-Stack, zu dem die wenigstens eine erfasste Schnittstelle gehört, bei Bedarf automatisch wenigstens einen Nachbar-Detektions-Agenten vorsieht, der ausgebildet und/oder eingerichtet ist, um wenigstens ein Protokoll bereitzustellen, welches die Erfassung der Netzwerktopologie ermöglicht.

Diese Aufgabe wird darüber hinaus gelöst durch einen Arbeitsknoten eines Clusters zur Durchführung des erfindungsgemäßen Verfahrens, umfassend:
- einen Host-Netzwerk-Stack und einen oder mehrere weitere Netzwerk-Stacks,
- ein Agenten-Kontroll-Modul, das dazu ausgebildet und/oder eingerichtet ist, zu erfassen, welche physikalischen Netzwerkschnittstellen der Arbeitsknoten aufweist, wobei sowohl der Host-Netzwerk-Stack als auch der oder die weiteren Netzwerk-Stacks auf das Vorhandensein von physikalischen Schnittstellen überprüft werden, und um für den Fall, dass wenigstens eine physikalische Netzwerkschnittstelle erstmalig erfasst oder von einem Netzwerk-Stack entfernt und einem andern Netzwerk-Stack zugeordnet wird, erfasste Schnittstelle, für die wenigstens eine erfasste Schnittstelle oder für den Netzwerk-Stack, zu dem die wenigstens eine erfasste Schnittstelle gehört, bei Bedarf automatisch wenigstens einen Nachbar-Detektions-Agenten vorzusehen, der ausgebildet und/oder eingerichtet ist, um wenigstens ein Protokoll bereitzustellen, welches die Erfassung der Netzwerktopologie ermöglicht.

Die Grundidee der vorliegenden Erfindung besteht mit anderen Worten darin, unabhängig von einem speziellen Container- und Orchestrierungssystem automatisiert Nachbar-Detektions-Agenten dynamisch zuzuordnen und insbesondere zu aktivieren, und zwar in Abhängigkeit der tatsächlichen physikalischen Schnittstellen und deren Zuordnung zu insbesondere "virtualisierten" Netzwerk-Stacks.

Der oder die Nachbar-Detektions-Agenten können wenigstens ein Protokoll zur Erfassung der Netzwerktopologie bereitstellen bzw. implementieren bzw. realisieren, dienen insbesondere dazu, dass mittels geeigneter, aus dem Stand der Technik vorbekannter Tools zur Topologie-Erkennung, wie etwa auf der Basis von PRONETA bzw. LLDP, die Netzwerktopologie (auch) auf der Ebene der Arbeitsknoten erfasst werden kann, ohne dass dazu wie bisher eine explizite, feste Integration der Protokolle und Software in die Arbeitsknoten notwendig ist. Das beispielhafte genannte PRONETA ist ein Industrial-Ethernet-Analyzer-Tool der Siemens AG für PROFINET-Netzwerke (siehe beispielsweise das unter https://cache.industry.siemens.com/dl/files/624/67460624/att_ 13917/v5/67460624_proneta_documentation_de.pdf erhältliche Handbuch).

Der oder die Nachbar-Detektions-Agenten, die auch als Nachbarschafts-Detektions-Agenten bzw. kurz NDAs bezeichnet werden können, sind bevorzugt virtuelle Netzwerkfunktionen, insbesondere Services für andere, von dem oder den Arbeitsknoten verschiedene Netzwerkteilnehmer.

Bei dem oder den Nachbar-Detektions-Agenten handelt es sich bevorzugt um funktionale Einheiten, die beispielsweise durch Software implementiert.

Es kann sich um Agenten gemäß der Definition der VDI-Richtlinie VDI/VDE 2653 handelt, die lautet: "Ein technischer Agent ist eine abgrenzbare (Hardware- oder/und Software-) Einheit mit definierten Zielen. Ein technischer Agent ist bestrebt, diese Ziele durch selbstständiges Verhalten zu erreichen und interagiert dabei mit seiner Umgebung und anderen Agenten. Das Ziel im Rahmen der erfindungsgemäßen Vorgehensweise ist insbesondere, die physikalische bzw. eine äquivalente virtuelle Vernetzung zwischen Netzteilnehmern (wie Automatisierungsgeräte, VMs, ...) bspw. über das Protokoll LLDP zu bestimmen. Bevorzugt sind die Nachbar-Detektions-Agenten reine Software-Agenten.

Ein Beispiel von Nachbar-Detektions-Agenten sind die sogenannten LLDP-Agenten bzw. LLDP-Daemons, die im Zusammenhang mit LLDP zum Einsatz kommen (siehe beispielsweise https://de.wikipedia.org/wiki/LLDP).

Die Steuerung der Lebenszyklen der Nachbar-Detektions-Agenten erfolgt dabei durch ein Agenten-Kontroll-Modul, das auch als "NDA-Controller" oder kurz NDAC bezeichnet werden kann. Die Agenten-Kontroll-Module selber können beispielsweise automatisiert durch das Orchestrierungs-System eines Clusters (wie beispielsweise Kubernetes) auf die Arbeitsknoten verteilt und aktuell gehalten werden. Entsprechend kann das Agenten-Kontroll-Modul von dem Orchestrierungs-System auf dem Arbeitsknoten vorgesehen werden bzw. worden sein.

Das erfindungsgemäße Verfahren kann selbstverständlich für mehrere, ggf. alle Arbeitsknoten eines Clusters durchgeführt werden. Entsprechend können mehrere Knoten eines Clusters ein Agenten-Kontroll-Modul zugeordnet bekommen bzw. aufweisen. Bevorzugt ist jedem Cluster-Arbeitsknoten des Clusters bzw. jedem Cluster-Arbeitsknoten in dem Netzwerk ein Agenten-Kontroll-Modul zugeordnet bzw. jeder Knoten weist ein solches auf und wird auf die erfindungsgemäße Weise automatisch konfiguriert.

Das erfindungsgemäß zum Einsatz kommende Agenten-Kontroll-Modul ermittelt bzw. überwacht bevorzugt den Systemausbau um insbesondere die Systemkonfiguration in Bezug auf die vorhandenen physikalischen Netzwerkschnittstellen des (jeweiligen) Arbeitsknotens.

Das zweckmäßiger Weise zu dem Orchestrierungs-System separate Agenten-Kontroll-Modul des bzw. des jeweiligen Arbeitsknotens erfasst die "physikalischen" Netzwerkschnittstellen des Knotens, dem es zugeordnet ist, auf dem es bevorzugt vorgesehen bzw. implementiert ist.

Bei physikalischen Netzwerkschnittstellen handelt es sich bevorzugt um solche, denen jeweils wenigstens ein Hardware-Treiber zugeordnet ist, bzw. die jeweils wenigstens einen Hardware-Treiber benötigen. Physikalische Netzwerkschnittstellen können nicht nur Hardware-Netzwerkschnittstellen sein, sondern auch virtuelle physikalische Netzwerkschnittstellen. Das Agenten-Kontroll-Modul erfasst entsprechend bevorzugt Hardware-Netzwerkschnittstellen und/oder virtuelle physikalische Netzwerkschnittstellen als physikalische Netzwerkschnittstellen des Arbeitsknotens.

Virtuelle physikalische Netzwerkschnittstellen werden beispielsweise von Hypervisoren für virtuelle Maschinen (VMs) bereitgestellt (zu Hypervisoren siehe beispielsweise https://de.wikipedia.org/wiki/Hypervisor). Bei einer virtuellen physikalischen Netzwerkschnittstelle im Sinne der vorliegenden Anwendung handelt es sich insbesondere um eine solche, die aus Sicht des Betriebssystems Treibersoftware, insbesondere wenigstens einen Hardware-Treiber benötigt. Es ist bevorzugt eine Netzwerkschnittstelle, für die wenigstens ein eigener Treiber, bevorzugt wenigstens ein eigener Betriebssystem-Treiber vorgesehen ist. Auch virtuelle Schnittstellen, die beispielswiese eine Virtuelle Maschine mit weiteren VMs oder der Außenwelt verbinden, gelten als "physikalische" Schnittstelle im Sinne der vorliegenden Anmeldung, im Gegensatz zu den direkt fest in den Linux-Kernel integrierten (nicht physikalischen) virtuellen Netzwerkschnittstellen wie VETH, Ethernet-Bridge-Schnittstellen und dergleichen, die keinen eigenen Treiber erfordern, sondern bereits intrinsischer Teil des Betriebssystems sind.
Prinzipiell können verschiedene Arte von physikalischen Netzwerkschnittstellen (HW oder virtuell) vorliegen.

Bei einer physikalischen Netzwerkschnittstelle kann es sich beispielsweise um eine Upstream-Schnittstelle, die insbesondere mit einem Upstream-, etwa Firmen-Netzwerk(segment) eines Anwenders zu verbinden oder verbunden ist, oder auch um eine Downstream- Schnittstelle, die mit einem unterlagerten Netzwerk(segment), insbesondere Zellen- oder Produktionsnetz(segment), zu verbinden oder verbunden ist, oder auch um eine WLAN-Schnittstelle, die mit einem Drahtlos-Netzwerk zu verbinden oder verbunden ist, handeln.

Die Überwachung bzw. das Erfassen der physikalischen Netzwerkschnittstellen erfolgt dabei nicht alleine nur im sogenannten "Host" und dessen Netzwerk-, etwa IP-Stack im Host Netzwerk-Namensraum (englisch: Network-Namespace) selbst, sondern auch über alle weiteren Netzwerk-, etwa IP-Stacks in weiteren Netzwerk-Namensräumen. Bei Linux beispielsweise kann das "procfs"-Dateisystem in Verbindung mit dem RTNETLINK API dienen, procfs insbesondere für das Erfassen virtueller IP-Stacks und RTNETLINK für das Erfassen der Netzwerkschnittstellen.

Die Unterscheidung zwischen physikalischen Netzwerkschnittstellen (Hardware oder virtuell) und rein virtuellen Schnittstellen kann beispielsweise anhand einer statischen Liste aller bekannten Typen von virtuellen Netzwerkschnittstellen und/oder an dem Vorhandensein eines eigenen Gerätetreibers für eine bestimmte Netzwerkschnittstelle erfolgen.

Eine physikalische Netzwerkschnittstelle kann von dem Agenten-Kontroll-Modul beispielsweise bei Inbetriebnahme des Arbeitsknotens erfasst werden und/oder, wenn sie im Betrieb des Arbeitsknotens neu hinzukommt oder auch den Netzwerk-Stack wechselt, also bei einem Netzwerk-Stack wegfällt und bei einem anderen neu hinzukommt. Es sei angemerkt, dass bei einer erstmaligen Inbetriebnahme des Knotens und/oder des zugeordneten Agenten-Kontroll-Moduls in der Regel sämtliche zu diesem Zeitpunkt vorhandenen physikalischen Schnittstellen (aus Sicht des Moduls) neu hinzukommende Schnittstellen darstellen werden, die erstmalig von dem Modul erfasst werden (können).

Selbstverständlich kann es sein, dass über die Betriebsdauer eines Arbeitsknotens mehrmals wenigstens eine physikalische Netzwerkschnittstelle neu hinzukommt und/oder von einem Netzwerk-Stack bzw. Namensraum zu einem anderen verschoben wird und/oder bei Inbetriebnahme eines Arbeitsknotens mehrere physikalische Netzwerkschnittstellen erstmals erfasst werden. Dann wird bevorzugt jedes Mal von dem Agenten-Kontroll-Modul - sofern Bedarf besteht - ein Nachbar-Detektions-Agent für die erfasste Schnittstelle vorgesehen.

Dass die Nachbar-Detektions-Agenten wenigstes ein Protokoll bereitstellen bedeutet insbesondere bzw. schließt insbesondere ein, dass sie, wenn sie ausgeführt werden zu wenigstens einem Protokoll, beispielsweise LLDP, gehörige Nachrichten an Nachbarn senden und von Nachbarn empfangen. Es sei angemerkt, dass das wenigstens eine Protokoll in Software realisiert sein bzw. werden kann (siehe beispielweise https://en.wikipedia.org/wiki/Communication_protocol).

Das von dem wenigstens einen Nachbar-Detektions-Agenten bereitgestellte Protokoll bzw. darüber ausgetauschte Informationen wird/werden zweckmäßiger Weise anschließend genutzt, um die Netzwerktopologie insbesondere zwischen dem (jeweiligen) Arbeitsknoten und weiteren Teilnehmern des Netzwerkes, insbesondere weiteren Arbeitsknoten des Clusters, zu ermitteln.

Eine Topologie-Erkennungs-Entität beispielsweise kann ermitteln, welche Nachbar-Detektions-Agenten vorhanden sind und kann deren Nachbarschafts-Informationen abfragen, diejenigen, die über die Nachrichten gesendet wurden und/oder diejenigen, die über Nachrichten empfangen wurden. Eine Topologie-Erkennungs-Entität kann für die Ermittlung der Nachbar-Detektions-Agenten das Agenten-Kontroll-Modul des (jeweiligen) Knotens kontaktieren.

Das Agenten-Kontroll-Modul installiert (beispielsweise per Docker API) bevorzugt für die erkannten physikalischen Netzwerkschnittstellen die benötigten Nachbar-Detektions-Agenten bzw. legt diese an. Dies geschieht auf Bedarf, also insbesondere, soweit noch nicht erfolgt. Bevorzugt je nach interner Realisierung der Nachbar-Detektions-Agenten kann das Modul einen eigenen NDA pro einzelner physikalischer Netzwerkschnittstelle anlegen oder auch einen eigenen NDA pro Netzwerk-, etwa IP-Stack mit mindestens einer physikalischen Netzwerkschnittstelle.

Es sind verschieden Modi des Betriebs der Agenten-Kontroll-Module nebst Nachbar-Detektions-Agenten möglich, beispielsweise:
1. one shot: hierbei werden die Agenten-Kontroll-Module etwa per Orchestrierungs-System nur zum Zwecke eines einmaligen Erfassens auf die Arbeitsknoten eines Clusters verteilt, dann wird das Erfassen der Nachbarn und damit der Netzwerk-Topologie durchgeführt und schließlich werden die Agenten-Kontroll-Module samt ihrer Nachbar-Detektions-Agenten wieder aus dem Cluster entfernt.
2. on demand: hierbei bleiben die Agenten-Kontroll-Module samt ihrer Nachbar-Detektions-Agenten dauerhaft in Betrieb, so dass jederzeit das Erfassen der Netzwerk-Topologie anhand der Nachbarn durchgeführt werden kann.

Um sicherzustellen, dass Nachbar-Detektions-Agenten nur bei Bedarf vorgesehen werden, insbesondere nur, wenn es noch keinen solchen für eine erfasste Schnittstelle bzw. den zugehörigen Stack gibt, das zugeordneten Agenten-Kontroll-Modul vor dem Vorsehen des wenigstens einen Nachbar-Detektions-Agenten prüft, ob für die erfasste Schnittstelle oder den Netzwerk-Stack, zu welchem diese gehört, bereits wenigstens ein Nachbar-Detektions-Agent vorgesehen ist, und das Agenten-Kontroll-Modul nur für den Fall, dass dem nicht so ist, für die erfasste Schnittstelle oder den zugehörigen Netzwerk-Stack wenigstens einen Nachbar-Detektions-Agenten vorsieht.

Die Erfindung bietet mehrere Vorteile. Einerseits erlaubt sie es, den tatsächlichen Ist-Zustand der Netzwerk-Topologie in industriellen Clustern, auch Clustern mit Arbeitslasten von digitalen Zwillingen einfach im laufenden Betrieb zu erfassen, anstatt einer geplanten und möglicherweise unvollständigen oder fehlerhaften Soll-Konfiguration anhand von Planungs-Dokumenten und Konfigurationsdateien. Der Ist-Zustand spiegelt die tatsächliche Summe mehrerer einzelner und möglicherweise voneinander unabhängiger Teil-Konfigurationen (Teil-Arbeitslasten) der Cluster-Kommunikation wieder. Die erfindungsgemäße Vorgehensweise ist dabei unabhängig von den einzelnen Containern und Orchestrierungs-Systemen und insbesondere auch unabhängig vom Lebenszyklus einer Container- und Cluster-Konfiguration. Es wird eine automatische Anpassung an die aktuelle Konfiguration eines Arbeitsknotens in Bezug auf physikalische Schnittstellen (einschließlich virtuellen physikalischen, insbesondere VM-Schnittstellen) erzielt und es werden nur die genau erforderlichen Nachbarschafts-Detektor-Agenten vorgesehen und diese können auch selbständig/automatisch wieder entfernt werden. Dabei kann sowohl ein bedarfsweiser Betrieb ("one shot") erfolgen als auch ein durchgängiges Erfassen der Netzwerk-Topologie in einem Cluster. Es wird eine Unterstützung der Topologie-Erkennung von TSN über die physikalischen Anlagennetzwerke hinaus auch in insbesondere virtuelle Container-Netzwerke hinein ermöglicht. TSN steht dabei für Time Sensitive Networking (zu TSN gehören eine Vielzahl von Standards, beispielsweise IEEE 802.1 Q, IEEE 802.1 Qcc, IEEE 802.1 AS-REV). Bei der erfindungsgemäßen Vorgehensweise ist keine statische Integration der benötigten Protokolle und Software erforderlich, die zu einer unvollständigen und/oder fehlerhafter Topologie-Erkennung führen kann.

Unter Verwendung des Agenten-Kontroll-Moduls wird ein dynamisches und angepasstes Aktivieren und Deaktivieren von Nachbar-Detektions-Agenten insbesondere anhand der aktuellen Systemkonfiguration mittels dynamisch an virtuelle IP-Stacks angebundene, eigenständige NDA-Container möglich.

Eine bevorzugte Ausführungsform der Erfindung zeichnet sich dadurch aus, dass dem Agenten-Kontroll-Modul das Vorhandensein einer oder mehrere physikalischer Schnittstellen bei Inbetriebnahme eines Arbeitsknotens und/oder das Hinzukommen und/oder Wegfallen einer oder mehrerer physikalischen Netzwerkschnittstellen im Betrieb eines Knotens kommuniziert wird, insbesondere, indem ein bevorzugt auf dem Knoten laufendes Betriebssystem dem Agenten-Kontroll-Modul ein entsprechendes Ereignis meldet, bevorzugt als Plug-and-Play-Ereignis.

Weiterhin bevorzugt gilt, dass der oder die Nachbar-Detektions-Agenten, die von dem Agenten-Kontroll-Modul vorgesehen werden, einen oder mehrere Software-Container umfassen oder durch einen oder mehrere Software-Container gegeben sind.

Der Host-Netzwerk-Stack ist insbesondere der Netzwerk-Stack eines Host-Netzwerknamensraumes des Arbeitsknotens und der oder die weiteren Netzwerk-Stacks sind insbesondere die Netzwerk-Stacks weiterer Netzwerknamensräume des Arbeitsknotens. Der Host-Netzwerk-Stack und/oder der oder die weiteren Netzwerk-Stacks sind bevorzugt virtuelle Netzwerk-Stacks.

Bei dem Host-Netzwerk-Stack und/oder bei dem oder den weiteren Netzwerk-Stacks handelt es sich bevorzugt um IP-Stacks.

Unter Namensräumen ist insbesondere ein Feature des Kernels eines Betriebssystems, wie etwa Linux, zu verstehen, dass es erlaubt, Kernel-Ressourcen zu partitionieren, beispielswiese derart, dass ein Prozess bzw. eine Gruppe von Prozessen einen Teil der Ressourcen sieht und ein anderer Prozess bzw. eine andere Gruppe von Prozessen einen anderen Teil der Ressourcen.
Über Netzwerk-Namensräume kann der Netzwerk-Stack (ins Deutsche übersetzt: Netzwerk-Stapel) virtualisiert werden.

Sind mehrere (visualisierte) Netzwerknamensräume und zugehörige Netzwerk-Stacks vorhanden, gilt zweckmäßiger Weise, dass jede Netzwerkschnittstelle (physisch oder virtuell) in genau einem Netzwerk-Namensraum vorhanden ist und zwischen den Namensräumen verschoben werden kann. Jeder Netzwerk-Namensraum verfügt in der Regel über einen eigenen Satz von IP-Adressen, eine eigene Routing-Tabelle, Socket-Listing, Connection Tracking Table, Firewall und andere netzwerkbezogene Ressourcen. Die Zerstörung eines Netzwerk-Namensraums zerstört in der Regel alle virtuellen Schnittstellen in ihm und verschiebt alle physischen Schnittstellen in ihm zurück in den ursprünglichen Netzwerk-Namensraum (Host-Netzwerk-Namensraum).

Unter dem Host-Netzwerknamensraum (englisch: Host-Network-Namespace) ist insbesondere derjenige Namensraum zu verstehen, mit dem das Betriebssystem des Arbeitsknotens startet. Der Host-Netzwerknamensraum kann auch als Root-Netzwerk-Namensraum bezeichnet werden.

Dem Host-Netzwerknamensraum und dem oder den weiteren Netzwerknamensräumen ist bevorzugt jeweils wenigstens ein von einem Nachbar-Detektions-Agenten verschiedener Prozess und/oder Container und/oder Pod zugeordnet.

Zweckmäßiger Weis ist vorgesehen, dass von dem Agenten-Kontroll-Modul der wenigstens eine von ihm vorgesehene Nachbar-Detektions-Agenten auch aktiviert wird. Die Aktivierung des wenigstens einen Nachbar-Detektions-Agenten umfasst dann bevorzugt das Starten wenigstens eines Containers dieses, und, dass der Container mit demjenigen Netzwerk-Namensraum verbunden wird, der zu dem Netzwerk-Stack gehört, dem die erfasste Schnittstelle zugeordnet ist.

Einer oder mehrere Nachbar-Detektions-Agenten stellen in weiterer vorteilhafter Ausgestaltung wenigstens eine virtuelle Netzwerkfunktion bereit.

Alternativ oder zusätzlich können einer oder mehrere Nachbar-Detektions-Agenten wenigstens einen Prozess umfassen oder durch wenigstens einen Prozess gegeben sein. Ein Aktivieren des (jeweiligen) Nachbar-Detektions-Agenten umfasst dann bevorzugt das Starten des wenigstens einen Prozesses.

Einer oder mehrere Nachbar-Detektions-Agenten umfassen weiterhin bevorzugt wenigstens einen Service für andere, außerhalb des Arbeitsknotens liegende Teilnehmer des Netzwerks oder sind durch wenigstens einen Service für andere, außerhalb des Arbeitsknotens liegende Teilnehmer gegeben.

Das Agenten-Kontroll-Modul konfiguriert in weiterer vorteilhafter Ausgestaltung wenigstens einen Nachbar-Detektions-Agenten, den es für eine erfassten Schnittstelle oder den zugehörigen Netzwerk-Stack vorgesehen hat bzw. vorsieht, für die erfasset Schnittstelle.

Eine weitere besonders vorteilhafte Ausgestaltung zeichnet sich dadurch aus, dass das Agenten-Kontroll-Modul für wenigstens eine erfasste Schnittstelle eine eindeutige Identität festlegt. Dies ist vor allem zweckmäßig, wenn den Schnittstellen keine global eindeutige Kennung zugeordnet ist, sondern beispielsweise eine nur auf Ebene der Nachbar-Detektions-Agenten eindeutige. Dies kann z.B. der Name der jeweiligen Netzwerkschnittstelle sein, wie er vom Betriebssystem-, etwa Linux-Kernel des Knotens vergeben wird.

Bevorzugt ist jedem Nachbar-Detektions-Agenten (NDA) eine eindeutige Kennung, beispielsweise eine UUID zugeordnet.

Ist dies der Fall, kann das Agenten-Kontroll-Modul aus der eindeutigen Kennung des jeweiligen Nachbar-Detektions-Agenten und dem nicht global eindeutigen Kenner der jeweiligen Schnittstelle eine eindeutige Kennung erzeugen, beispielswiese <NDA-Kenner, Schnittstellen-Kenner>.

Anhand der eindeutigen Identität kann dann ein Netzwerk-Topologie-Erkennungs-Protokoll bzw. -Tool, beispielsweise PRONETA oder LLDP, die physikalische Schnittstelle von anderen physikalischen Schnittstellen unterscheiden. Es kann insbesondere später die verschiedenen physikalischen Netzwerkschnittstellen wieder eindeutig den einzelnen Arbeitsknoten zuweisen.

Das Agenten-Kontroll-Modul kann darüber hinaus bevorzugt alle dem Host-Netzwerk-Stack und dem oder den weiteren Netzwerk-Stacks zugeordnete Elemente, insbesondere Prozesse und/oder Pods und/oder Container erfassen. Dies insbesondere, um zu ermitteln, ob der jeweilige Netzwerk-Stack aktiv in Verwendung ist oder diesem zugeordnete Elemente bereits beendet wurden.

Für den Fall, dass das Agenten-Kontroll-Modul erkennt, dass sämtliche einem Netzwerk-Stack zugeordneten Elemente, insbesondere Prozesse und/oder Pods und/oder Container, mit Ausnahme wenigstens eines diesem zugeordneten Nachbar-Detektions-Agenten beendet sind, wird den wenigstens einen Nachbar-Detektions-Agenten entfernt.

Das Agenten-Kontroll-Modul des erfindungsgemäßen Arbeitsknotens ist in vorteilhafter Weiterbildung entsprechend ausgebildet und/oder eingerichtet.

Gemäß dieser vorteilhaften Weiterbildung erfasst das Agenten-Kontroll-Modul alle einem Netzwerk-, insbesondere IP-Stack bzw. Network Namespace zugeordneten aktiven Elemente, insbesondere Prozesse, Container und/oder Pods. Mit dieser Information kann das Modul erkennen, ob ein bestimmter Netzwerk-Stack momentan aktiv in Verwendung ist oder aber ob die dem Stack zugeordneten Prozesse/Container/Pods bereits beendet wurden. In diesem Fall entfernt das Agenten-Kontroll-Modul noch explizit den oder die dem Stack bzw. Schnittstellen dieses zugeordneten Nachbar-Detektions-Agenten soweit dieser bzw. diese zuvor installiert wurde. Dies gewährleistet, dass das Betriebssystem den virtuellen Stack mit dessen physikalischen Netzwerkschnittstelle freigibt, was in der Regel nicht erfolgt, solange noch mindestens ein zugeordneter Prozess (oder Container/Pod mit mindestens einem Prozess) existiert. Dieser "Aufräummechanismus" gewährleistet, dass unabhängig von den Orchestrierungs-und Container-Systemen sichergestellt wird, dass das dynamische Umkonfigurieren von Netzwerk-Stacks und den angebundenen Netzwerken und -Schnittstellen weiterhin unbehindert möglich ist, ohne dass "übriggebliebene" Nachbar-Detektions-Agenten spätere Rekonfigurationen versehentlich blockieren.

Ein weiterer Gegenstand der Erfindung ist ein Cluster-Arbeitsknoten, der zur Durchführung des erfindungsgemäßen Verfahrens ausgebildet und/oder eingerichtet ist.

Bei einem Cluster-Arbeitsknoten kann es sich beispielsweise um ein (separates) Gerät bzw. eine (separate) Hardware-Komponente handeln. Selbstverständlich ist es auch möglich, dass ein Arbeitsknoten als "Software-Arbeitsknoten" vorliegt, etwa in Form eines Computerprogrammes bzw. einer Computerprogramm-Sammlung, die auf einer zu dessen/deren Ausführung ausgebildeten Einrichtung, etwa einem PC oder einer anderen Recheneinrichtung oder einem beliebigen anderen Gerät, abgelegt ist.

Auch hinsichtlich des Agenten-Kontroll-Moduls gilt, dass dieses in Software oder Hardware oder einer Kombination aus Software und Hardware implementiert sein kann.

Ein erfindungsgemäßer Arbeitsknoten kann wenigstens eine virtuelle Maschine (VM) umfassen oder durch eine solche gegeben sein. Ein Arbeitsknoten kann beispielsweise auch in eine Automatisierungskomponente, etwa eine Steuerung, oder in ein anderes Gerät integriert sein, dies sowohl in Form von Hardware- als auch Software. Es ist auch möglich, dass eine erfindungsgemäßer Arbeitsknoten wenigstens einer Automatisierungskomponente zugeordnet ist. Ein Cluster-Arbeitsknoten kann auch durch einen entsprechend eingerichteten Industrie-Computer bzw. -PC gegeben sein bzw. einen solchen umfassen.

Besonders bevorzugt handelt es sich bei dem erfindungsgemäßen Arbeitsknoten um ein Edge-Gerät, insbesondere Industrial-Edge-Gerät. Unter einem Edge-Gerät ist bevorzugt ein Gerät zu verstehen, welches die bzw. wenigstens eine Funktion des Edge-Computings ausführt (zum Edge-Computing siehe z.B. https://de.wikipedia.org/wiki/Edge_Computing). Ein Industrial-Edge-Gerät kann beispielsweise durch einen Industrie-Computer gegeben sein, der eine Edge-Computing Funktion ausführt.

Der erfindungsgemäße Arbeitsknoten ist in vorteilhafter Ausgestaltung ausgebildet und/oder eingerichtet, um eines oder mehrere der vorstehend beschriebenen Merkmale zu realisieren. Soweit die vorstehen beschrieben Merkmale das Agenten-Kontroll-Modul betreffen, gilt, dass das Agenten-Kontroll-Modul bevorzugt entsprechend ausgebildet und/oder eingerichtet ist.

Weiterer Gegenstand der Erfindung ist ein Cluster umfassend wenigsten, bevorzugt mehrere erfindungsgemäße Arbeitsknoten.

Die Erfindung betrifft darüber hinaus auch ein insbesondere industrielles Netzwerk, welches wenigstens einen erfindungsgemäßen Arbeitsknoten umfasst. Bevorzug umfasst das Netzwerk mehrere, zu einem Cluster gehörige bzw. einen Cluster bildende erfindungsgemäße Arbeitsknoten.

Ein weiterer Gegenstand der vorliegenden Erfindung ist ein Computerprogramm umfassend Programmcode-Mittel, die bei der Ausführung des Programms auf wenigstens einem Computer den wenigstens einen Computer veranlassen, die Schritte des erfindungsgemäßen Verfahrens durchzuführen.

Darüber hinaus betrifft die Erfindung ein computerlesbares Medium, das Instruktionen umfasst, die, wenn sie auf wenigstens einem Computer ausgeführt werden, den wenigstens einen Computer veranlassen, die Schritte des erfindungsgemäßen Verfahrens durchzuführen. Ein Computer kann Teil eines erfindungsgemäßen Knotens sein bzw. ein erfindungsgemäßer Knoten kann durch einen Computer, etwa einen Industrie-Computer - ggf. mit Edge-Geräte-Funktonalität - gegeben sein.

Bei dem computerlesbaren Medium kann es sich beispielsweise um eine CD-ROM oder DVD oder einen USB oder Flash Speicher handeln. Es sei angemerkt, dass unter einem computerlesbaren Medium nicht ausschließlich ein körperliches Medium zu verstehen sein soll, sondern ein solches beispielswiese auch in Form eines Datenstromes und/oder eines Signals, welches einen Datenstrom repräsentiert, vorliegen kann.

Weitere Merkmale und Vorteile der vorliegenden Erfindung werden anhand der nachfolgenden Beschreibung erfindungsgemäßer Ausführungsformen unter Bezugnahme auf die beiliegende Zeichnung deutlich. Darin ist
- Figur 1: eine Teildarstellung eines industriellen Netzwerkes, in dem die Netzwerktopologie zwischen den Arbeitsknoten eines Clusters auf konventionelle Weise ermittelt wird, nachdem die Knoten einer manuellen Konfiguration unterzogen wurden;
- Figur 2: eine Ausführungsbeispiel eines erfindungsgemäßen Cluster-Arbeitsknotens in rein schematischer Darstellung; und
- Figur 3: eine Teildarstellung eines industriellen Netzwerkes, in die Arbeitsknoten auf erfindungsgemäße Weise konfiguriert werden und die Netzwerktopologie zwischen den Knoten ermittelt werden kann, ohne dass es einer manuellen Konfiguration der Knoten bedarf.

Die Figur zeigt eine rein schematische Teildarstellung eines industriellen Netzwerkes, an dem mehrere Arbeitsknoten 1 eines Clusters 2 teilnehmen. Die Knoten 1 sind vorliegend durch Industrial-Edge-Geräte, konkret Industrie-PCs, die eine Edge-Computing-Funktion übernehmen, gegeben. Alternativ dazu können Knoten 1 auch durch virtuelle Maschinen (VMs) gegeben sein, die etwa auf einem leistungsfähigen Industrie-PC mit mehreren CPUs oder auf einem Blade-PC insbesondere zusammen mit anderen Elementen und beispielsweise in einem klimatisierten Rechenzentrum etc. implementiert sind.

Es sei angemerkt, dass in der Teildarstellung nur beispielhaft zwei der Arbeitsknoten 1 des Cluster 2 dargestellt sind, und dieser noch weitere Arbeitsknoten aufweisen 1 kann bzw. aufweist. Darüber hinaus können an dem industriellen Netzwerk in an sich bekannter Weise noch weitere Komponenten teilnehmen, bzw. nehmen in an sich bekannter Weise noch weitere Komponenten teil, etwa Automatisierungskomponenten in Form von Steuerungen, wie PLCs, IO-Geräten, HMI-Panels und so weiter. Jeder Arbeitsknoten weist eine oder mehrere Netzwerkschnittstellen 3 auf, bei denen es sich u.a. um physikalische Netzwerkschnittstellen 3, konkret Hardware-Netzwerkschnittstellen und/oder virtuelle physikalische Netzwerkschnittstellen 3 handeln kann.

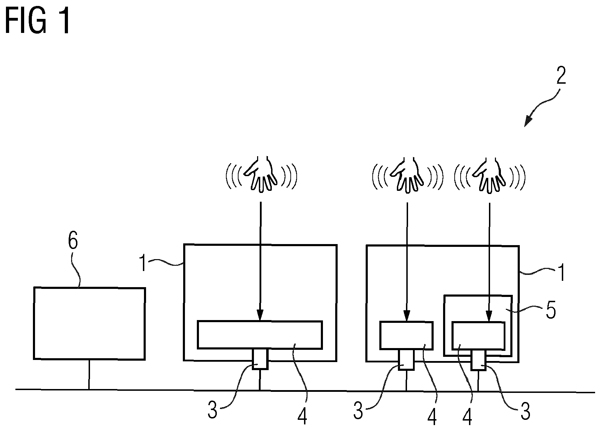

Jeder der Arbeitsknoten 1 ist einer manuellen Konfiguration unterzogen worden, was durch die skizzierten Hände und darunter befindlichen Pfeile in der Figur 1 angedeutet ist. Über die manuelle Konfiguration sind die Knoten 1 mit den für eine Topologie-Erkennung erforderlichen Protokolle und der dazugehörigen Software ausgestattet worden. Die Protokolle nebst zugehöriger Software sind in der Figur durch mit dem Bezugszeichen 4 versehene Blockelemente angedeutet. Der in Figur 1 rechte Knoten 1 umfasst fermer einen Container bzw. Pod 5.

Mittels geeigneter Topologie-Erfassungs-Protokolle, beispielsweise LLDP (siehe IEEE 802.1AB) und SNMP (siehe beispielsweise die Requests for Comments der IETF RFC 1901, 1905 und 1906) kann dann eine Topologie-Erfassung erfolgen. Via LLDP wird dabei das gegenseitige Übermitteln von Systeminformationen zwischen direkt durch einen Link benachbarten Knoten 1 bewerkstelligt, und SNMP ermöglicht das Auslesen dieser in den Knoten 1 gelernten Informationen über ihre jeweiligen Nachbarn über das Netz hinweg. In der Figur 1 ist ein Topologie-Scanner 6 dargestellt, welcher letzteres abwickelt.

Unter Durchführung eines Ausführungsbeispiels des erfindungsgemäßen Verfahrens zum automatischen Konfigurieren der Arbeitsknoten eines Clusters kann auf die manuelle Konfiguration verzichtet werden.

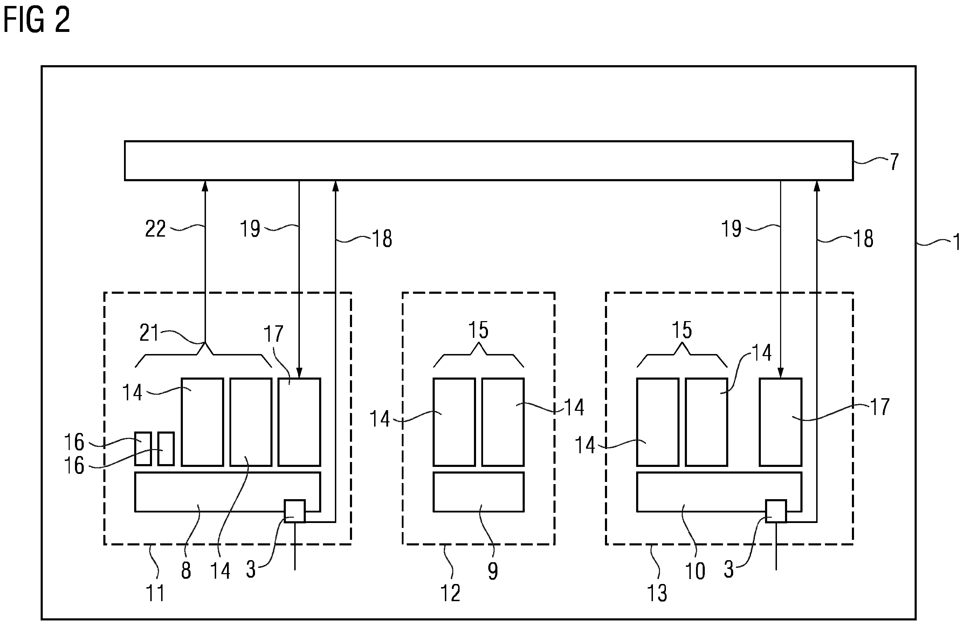

Hierzu ist jedem Arbeitsknoten 1, wie in Figur 2 rein schematisch dargestellt, jeweils ein Agenten-Kontroll-Modul 7 zugeordnet. Die Module 7 der Knoten 1 sind bei dem hier beschriebenen Beispiel in Software- und auf dem Knoten selber implementiert. In der Figur 2 ist nur ein Arbeitsknoten 1 beispielhaft gezeigt. Jeder Knoten 1 des Clusters 2 weist ein Agenten-Kontroll-Modul 7 auf, wie es in der Figur 2 zu erkennen ist.

Von dem Agenten-Kontroll-Modul 7 des jeweiligen Knotens 1 wird überwacht, welche physikalischen Netzwerkschnittstellen 3 der jeweilige Knoten 1 aufweist. Physikalische Netzwerkschnittstellen sind dabei sowohl Hardware-Netzwerkschnittstellen als auch virtuelle physikalische Schnittstellen, wie sie beispielsweise von Hypervisoren für virtuelle Maschinen (VMs) bereitgestellt werden.

Jeder Knoten 1 weist, wie in Figur 2 beispielhaft dargestellt, einen Host-Netzwerk-Stack, konkret einen Host-IP-Stack 8 sowie weitere Netzwerk-Stacks, konkret IP-Stacks 9, 19 auf. Bei dem Knoten 1 gemäß Figur 2 sind neben dem Host-IP-Stack 8 noch zwei weitere IP-Stacks 9, 10 vorhanden, wobei dies rein beispielhaft zu verstehen ist und auch eine andere Anzahl vorhanden sein kann.

Der Host-IP-Stack 8 ist der Netzwerk-Stack eines Host-Netzwerknamensraumes 11 des jeweiligen Arbeitsknotens 1 und die weiteren IP-Stacks 9, 10 sind die Netzwerk-Stacks weiterer Netzwerknamensräume 12, 13 des jeweiligen Knotens 1. Der Host-IP-Stack 8 und die weiteren IP-Stacks 9, 10 sind vorliegend virtuelle Netzwerk-Stacks.

Unter Namensräumen 11-13 ist dabei ein Feature des Kernels des Betriebssystems des jeweiligen Knotens 1, wie beispielsweise Linux, zu verstehen, dass es erlaubt, Kernel-Ressourcen zu partitionieren, beispielswiese derart, dass ein Prozess bzw. eine Gruppe von Prozessen einen Teil der Ressourcen sieht und ein anderer Prozess bzw. eine andere Gruppe von Prozessen einen anderen Teil der Ressourcen.

Über Netzwerk-Namensräume kann der Netzwerk-Stack visualisiert werden. Unter dem Host-Netzwerknamensraum 8 ist vorliegend derjenige Namensraum zu verstehen, mit dem das Betriebssystem des jeweiligen Arbeitsknotens 1 startet.

Jedem IP-Stack 8-10 bzw. jedem Netzwerk-Namensraum 11-13 sind vorliegend Software-Container 14, im Falle der IP-Stacks 9 und 10 bzw. Namensräume 12 und 13 gruppiert in Pods 15, zugeordnet. Dem Host-IP-Stack 8 bzw. Host-Netzwerk-Namensraum 11 sind bei dem Beispiel gemäß Figur 2 ferner Prozesse 16 zugeordnet. Es sei angemerkt, dass diese Verteilung rein beispielhaft zu verstehen ist und jedem Stack 8-10 bzw. Namensraum 11-13 auch eine andere Anzahl (einschließlich null) von Containern 14, Pods 15 und Prozessen 16 zugeordnet sein kann.

Von den beiden physikalischen Schnittstellen 3 des Knotens 1 ist eine dem Host-IP-Stack 8 zugeordnet und eine dem in Figur 2 rechten weiteren IP-Stack 10.

Die Überwachung bzw. das Erfassen der physikalischen Netzwerkschnittstellen 3 durch das Agenten-Kontroll-Modul 7 erfolgt nicht nur im sogenannten "Host" und dessen IP-Stack 8 im Host Netzwerk-Namensraum 11 selbst, sondern auch über alle weiteren IP-Stacks 9, 10 in weiteren Netzwerk-Namensräumen 12, 13. Bei Linux beispielsweise dient dazu das "procfs"-Dateisystem in Verbindung mit dem RTNETLINK API.

Für den Fall, dass wenigstens eine physikalische Schnittstelle 3 neu hinzukommt oder wenigstens eine physikalische Schnittstelle 3 von einem Netzwerk-Stack 8-10 entfernt und einem anderen Netzwerk-Stack 8-10 zugeordnet wird, erfasste Schnittstelle, sieht das Agenten-Kontroll-Modul 7 für die wenigstens eine erfasste Schnittstelle 3 oder für den Netzwerk-Stack 8-10, zu dem die wenigstens eine erfasste Schnittstelle 3 gehört, bei Bedarf automatisch wenigstens einen Nachbar-Detektions-Agenten 17 (kurz NDA) vor, der ausgebildet und/oder eingerichtet ist, um wenigstens ein Protokoll bereitzustellen, welches die Erfassung der Netzwerktopologie ermöglicht. Es kann beispielsweise das Protokoll LLDP für das Erkennen von Nachbarn über den Nachbar-Detektions-Agenten bereitgestellt werden, bei dem es sich dann beispielsweise um einen LLDP-Agenten handelt. Dass die Nachbar-Detektions-Agenten 17 wenigstes ein Protokoll bereitstellen bedeutet insbesondere bzw. schließt insbesondere ein, dass sie, wenn sie ausgeführt werden zu wenigstens einem Protokoll, beispielsweise LLDP, gehörige Nachrichten an Nachbarn senden und von Nachbarn empfangen.

Dass das Agenten-Kontroll-Modul 7 die physikalischen Netzwerkschnittstellen 3 in den Stacks 8-10 erfasst ist in der Figur 2 durch einen von der jeweiligen Schnittstelle 3 zu dem Modul 7 weisenden Pfeil 18 veranschaulicht.

Dem Agenten-Kontroll-Modul 7 wird das neue Hinzukommen einer oder mehrerer physikalischen Netzwerkschnittstellen 3 und/oder der Wechsel einer oder mehrerer physikalischen Netzwerkschnittstellen 3 von einem Netzwerk-Stack bzw. Netzwerknamensraum zu einem anderen bevorzugt kommuniziert, indem ein auf dem Knoten 1 laufendes Betriebssystem dem Agenten-Kontroll-Modul 7 ein entsprechendes Ereignis meldet, bevorzugt als Plug-and-Play-Ereignis.

Jeder Nachbar-Detektions-Agent bzw. NDA 17 ist vorliegend durch einen Software-Container gegeben. Das jeweilige Agenten-Kontroll-Modul 7 installiert, beispielsweise per Docker API, die benötigten NDAs 17 auf Bedarf, insbesondere, soweit solche noch nicht vorhanden sind.

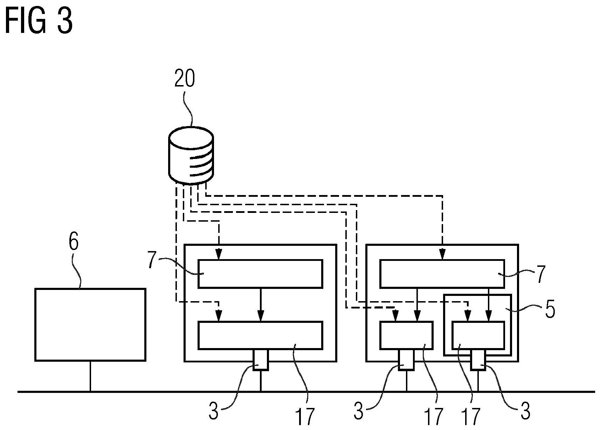

Das Vorsehen bzw. installieren der NDAs 17 durch das Modul 7 ist in der Figur 2 durch einen jeweils von dem Modul 7 zu dem jeweiligen NDA 17 weisenden Pfeil 19 veranschaulicht. Die NDA-Container 17 stammen dabei von einen Container-Repository 20, welches nur in der Figur 3 dargestellt ist. Bei einem solchen Repository 20 handelt es sich insbesondere um einen Satz gleichnamiger Images mit verschiedenen Tags, zumeist Versionen. Images sind insbesondere Speicherabbilder eines Containers. Ein Image ist in der Regel portabel, kann in Repositories gespeichert und mit anderen Nutzern geteilt werden. Aus einem Image können immer mehrere Container gestartet werden zu Images und Repositories siehe beispielsweise auch https://de.wikipedia.org/wiki/Docker_(Software)). Dass die NDAs 17 von dem Container-Repository 20 stammen ist durch die NDAs 17 und das Container- Repository 20 verbindende gestrichelte Pfeile veranschaulicht.

Es sei angemerkt, dass von dem Container-Repository 20 auch die Agenten-Kontroll-Module 7 selber stammen. Diese sind automatisiert durch das Orchestrierungs-System des Clusters 2, welches vorliegend durch Kubernetes gegeben ist, auf die Arbeitsknoten 1 verteilt worden und können durch dieses auch aktuell gehalten werden. Dass auch die Module 7 von dem Container-Repository 20 stammen ist in der Figur 2 durch weitere gestrichelte Pfeile veranschaulicht.

Bevorzugt je nach interner Realisierung der NDAs 17 kann das Modul 7 einen eigenen NDA 17 pro einzelner physikalischer Netzwerkschnittstelle 3 anlegen oder auch einen eigenen NDA 17 pro IP-Stack 8-10 mit mindestens einer physikalischen Netzwerkschnittstelle 3.

Um sicherzustellen, dass Nachbar-Detektions-Agenten 17 nur bei Bedarf vorgesehen werden, insbesondere nur, wenn es noch keinen solchen für eine erfasste Schnittstelle 3 bzw. den zugehörigen Stack 8-10 gibt, prüft das jeweilige Agenten-Kontroll-Modul 7 vor dem Vorsehen, insbesondere installieren eines Nachbar-Detektions-Agenten 17 bevorzugt, ob für die erfasste Schnittstelle 3 oder den Netzwerk-Stack 8-10, zu welcher diese gehört, bereits wenigstens ein Nachbar-Detektions-Agent 17 vorgesehen ist und sieht nur für den Fall, dass dem nicht so ist, wenigstens einen Nachbar-Detektions-Agenten 17 für diese oder den zugehörigen IP-Stack 8-10 vor.

Das jeweilige Agenten-Kontroll-Modul 7 legt ferner für die von ihm erfassten physikalischen Schnittstelle 3 eine eindeutige Identität fest. Anhand der eindeutigen Identität kann ein Netzwerk-Topologie-Erkennungs-Protokoll bzw. -Tool, beispielsweise PRONETA oder LLDP, die jeweilige physikalische Schnittstelle 3 insbesondere von anderen physikalischen Schnittstellen 3 unterscheiden. Es kann insbesondere später die verschiedenen physikalischen Netzwerkschnittstellen 3 wieder eindeutig den einzelnen Arbeitsknoten 1 zuweisen.

Das Agenten-Kontroll-Modul 7 aktiviert den oder die von ihm vorgesehenen, insbesondere installierten NDAs 17 auch, wobei die Aktivierung das Starten des jeweiligen NDA-Containers umfasst. Der jeweilige einen NDA 17 bildende Container wird ferner von dem Modul 7 mit demjenigen Netzwerk-Namensraum 11-13 verbunden, der zu dem Netzwerk-Stack 8-10 gehört, dem die jeweilige erfasste Schnittstelle 3 zugeordnet ist. Bei dem Beispiel gemäß Figur 1 wird entsprechend derjenige NDA-Container 17, welcher für die im Host-IP-Stack 8 bzw. Host-Namensraum 11 erfasste Schnittstelle 3 vorgesehen wird, mit dem Host-Namensraum 8 verbunden und derjenige NDA-Container 17, welcher für die in dem weiteren IP-Stack 10 bzw. weiteren Namensraum 13 erfasst Schnittstelle 3 vorgesehen wird dem weiteren Namensraum 13 verbunden.

Die NDAs 17 stellen die Protokolle und Informationen bereit, damit über existierende Tools wie LLDP oder auch PRONETA die Netzwerk-Topologie auf der Ebene der Arbeitsknoten 1 (VMs, physikalische Edge-Geräte) erfasst werden können, ohne dass dazu wie bisher eine manuelle, explizite, feste Integration der Protokolle und Software in die Arbeitsknoten 1 notwendig ist. Die NDAs 17 sind dabei primär virtuelle Netzwerkfunktionen, also Services/Dienste für andere Teilnehmer im Netz außerhalb des jeweiligen Arbeitsknotens 1.

Die von den NDAs 17 bereitgestellten Protokolle bzw. darüber ausgetauschte/bereitgestellte Informationen werden anschließend genutzt, um die Netzwerktopologie zwischen den Arbeitsknoten 1 des Clusters zu ermitteln. Dies kann, genau wie im Falle der manuell konfigurierten Knoten 1 (vgl. Figur 1) mittels eines Topologie-Scanners 6 erfolgen. Dies ist für den Fall der erfindungsgemäß konfigurierten Knoten 1 in Figur 3 angedeutet.

Der Topologie-Scanner 6 kann beispielsweise ermitteln, welche Nachbar-Detektions-Agenten 17 vorhanden sind und kann deren Nachbarschafts-Informationen abfragen. Abgefragt werden können dabei insbesondere diejenigen Nachbar-Informationen, die über Protokoll-, insbesondere LLDP-Nachrichten von den Agenten 17 gesendet wurden und/oder diejenigen, die über Protokoll-, insbesondere LLDP-Nachrichten von diesen empfangen wurden. Der Topologie-Scanner 6 kann für die Ermittlung der Nachbar-Detektions-Agenten 17 das Agenten-Kontroll-Modul 7 des (jeweiligen) Knotens 1 kontaktieren.

Das jeweilige Agenten-Kontroll-Modul 7 erfasst darüber hinaus alle dem 8 Host-Netzwerk-Stack und den weiteren Netzwerk-Stacks 9, 10 des jeweiligen Knotens 1 zugeordnete Elemente, insbesondere Prozesse 16 und/oder Pods 15 und/oder Container 14, um zu ermitteln, ob der jeweilige Netzwerk-Stack 8-10 aktiv in Verwendung ist oder diesem zugeordneten Elemente 14, 15, 16 bereits beendet wurden. Diese Erfassung ist in der Figur 2 durch Elemente des Host-IP-Stacks 8 bzw. Host-Netzwerknamensraumes 11 einschließenden geschweifte Klammer 21 und einen Pfeil 22 von dieser zum Modul 7 angedeutet.

Für den Fall, dass ein Agenten-Kontroll-Modul 7 erkennt, dass sämtliche einem Netzwerk-Stack 8-10 zugeordneten Elemente 14, 15, 16 (mit Ausnahme des oder den vorgesehenen Nachbar-Detektions-Agenten 17) beendet sind, wird der bzw. werden die Nachbar-Detektions-Agenten 17 wieder entfernt, zweckmäßiger Weise diejenigen, die von dem Modul 7 vorgesehen wurden.

So kann das jeweilige Modul 7 erkennen, ob ein bestimmter Netzwerk-Stack 8-10 seines Knotens 1 momentan aktiv in Verwendung ist oder aber, ob die dem Stack 8-10 zugeordneten Prozesse 16, Container 14 und/oder Pods 15 bereits beendet wurden. In diesem Fall entfernt das Modul 7 noch explizit den oder die dem Stack bzw. Schnittstellen dieses zugeordneten Nachbar-Detektions-Agenten 17. Dies gewährleistet, dass das Betriebssystem den virtuellen Stack 8-10 mit dessen physikalischen Netzwerkschnittstellen 3 freigibt, was in der Regel nicht erfolgt, solange noch mindestens ein zugeordneter Prozess (oder Container/Pod mit mindestens einem Prozess) existiert. Dieser "Aufräummechanismus" gewährleistet, dass unabhängig von den Orchestrierungs- und Container-Systemen sichergestellt wird, dass das dynamische Umkonfigurieren von Netzwerk-Stacks und den angebundenen Netzwerken und -Schnittstellen weiterhin unbehindert möglich ist, ohne dass "übriggebliebene" Nachbar-Detektions-Agenten 17 spätere Rekonfigurationen versehentlich blockieren.

Prinzipiell sind verschieden Modi des Betriebs der Agenten-Kontroll-Module 7 nebst Nachbar-Detektions-Agenten 17 möglich, beispielsweise:
1. one shot: hierbei werden die Agenten-Kontroll-Module etwa per Orchestrierungs-System nur zum Zwecke eines einmaligen Erfassens auf die Arbeitsknoten 1 der Clusters 2 verteilt, dann wird das Erfassen der Nachbarn und damit der Netzwerk-Topologie durchgeführt und schließlich werden die Agenten-Kontroll-Module 7 samt ihrer Nachbar-Detektions-Agenten 17 wieder aus den Knoten 1 des Clusters 2 entfernt.
2. on demand: hierbei bleiben die Agenten-Kontroll-Module 7 samt ihrer Nachbar-Detektions-Agenten 17 dauerhaft in Betrieb, so dass jederzeit das Erfassen der Netzwerk-Topologie anhand der Nachbarn durchgeführt werden kann.

Die beschriebene erfindungsgemäße Vorgehensweise bietet viele Vorteile. Einerseits erlaubt sie es, den tatsächlichen Ist-Zustand der Netzwerk-Topologie in industriellen Clustern 2, auch Clustern mit Arbeitslasten von digitalen Zwillingen einfach im laufenden Betrieb zu erfassen, anstatt einer geplanten und möglicherweise unvollständigen oder fehlerhaften Soll-Konfiguration anhand von Planungs-Dokumenten und Konfigurationsdateien. Der Ist-Zustand spiegelt die tatsächliche Summe mehrerer einzelner und möglicherweise voneinander unabhängiger Teil-Konfigurationen (Teil-Arbeitslasten) der Cluster-Kommunikation wieder. Die erfindungsgemäße Vorgehensweise ist dabei unabhängig von den einzelnen Containern 14 und Orchestrierungs-Systemen und insbesondere auch unabhängig vom Lebenszyklus einer Container- und Cluster-Konfiguration. Es wird eine automatische Anpassung an die aktuelle Konfiguration eines Arbeitsknotens 1 in Bezug auf physikalische Schnittstellen 3 (einschließlich virtuellen physikalischen, insbesondere VM-Schnittstellen) erzielt und es werden nur die genau erforderlichen Nachbarschafts-Detektor-Agenten 17 vorgesehen und diese können auch selbständig/automatisch wieder entfernt werden. Dabei kann sowohl ein bedarfsweiser Betrieb ("one shot") erfolgen als auch ein durchgängiges Erfassen der Netzwerk-Topologie in einem Cluster. Es wird eine Unterstützung der Topologie-Erkennung von TSN über die physikalischen Anlagennetzwerke hinaus auch in insbesondere virtuelle Container-Netzwerke hinein ermöglicht. Es ist keine statische Integration der benötigten Protokolle und Software erforderlich, die zu einer unvollständigen und/oder fehlerhafter Topologie-Erkennung führen kann.

Es sei angemerkt, dass das in Figur 3 dargestellte industrielle Netzwerk, welches mehrere erfindungsgemäße Cluster-Arbeitsknoten umfasst, ein Ausführungsbeispiel eines erfindungsgemäßen industriellen Netzwerkes ist.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Verfahren zum automatischen Konfigurieren eines Arbeitsknotens (1) eines Clusters (2), wobei der Arbeitsknoten (1) an einem Netzwerk teilnimmt und dem Arbeitsknoten (1) von einem Orchestrierungs-System Arbeitslasten in Form von Software-Containern (14) zugewiesen sind und/oder werden, bei dem
- von einem dem Arbeitsknoten (1) zugeordneten Agenten-Kontroll-Modul (7) erfasst wird, welche physikalischen Schnittstellen (3) der Arbeitsknoten (1) aufweist, wobei der Arbeitsknoten (1) einen Host-Netzwerk-Stack (8) und einen oder mehrere weitere Netzwerk-Stacks (9, 10) aufweist, und sowohl der Host-Netzwerk-Stack (8) als auch der oder die weiteren Netzwerk-Stacks (9, 10) auf das Vorhandensein von physikalischen Schnittstellen (3) überprüft werden, und
- das Agenten-Kontroll-Modul (7) für den Fall, dass wenigstens eine physikalische Netzwerkschnittstelle (3) erstmalig erfasst wird oder von einem Netzwerk-Stack (8-10) entfernt und einem anderen Netzwerk-Stack (8-10) zugeordnet wird, erfasste Schnittstelle (3), für die wenigstens eine erfasste Schnittstelle (3) oder für den Netzwerk-Stack (8-10), zu dem die wenigstens eine erfasste Schnittstelle (3) gehört, bei Bedarf automatisch wenigstens einen Nachbar-Detektions-Agenten (17) vorsieht, der ausgebildet und/oder eingerichtet ist, um wenigstens ein Protokoll bereitzustellen, welches die Erfassung der Netzwerktopologie ermöglicht.

2. Verfahren nach Anspruch 1,
**dadurch gekennzeichnet, dass**
das Agenten-Kontroll-Modul (7) auf dem Arbeitsknoten (1) vorgesehen ist, und/oder das Agenten-Kontroll-Modul (7) zu dem Orchestrierungs-System separat ist, und/oder das Agenten-Kontroll-Modul (7) von dem Orchestrierungs-System auf dem Arbeitsknoten (1) vorgesehen wird oder wurde.

3. Verfahren nach Anspruch 1 oder 2,
**dadurch gekennzeichnet, dass**
der wenigstens eine Nachbar-Detektions-Agent (17) einen oder mehrere Software-Container umfasst oder durch einen oder mehrere Software-Container gegeben ist.

4. Verfahren nach einem der vorhergehenden Ansprüche,
**dadurch gekennzeichnet, dass**
der Host-Netzwerk-Stack (8) der Netzwerk-Stack eines Host-Netzwerknamensraumes (11) des Arbeitsknotens (1) ist und der oder die weiteren Netzwerk-Stacks (9, 10) die Netzwerk-Stacks weiterer Netzwerknamensräume (12, 13) des Arbeitsknotens (1) sind.

5. Verfahren nach Anspruch 3 und 4,
**dadurch gekennzeichnet, dass**
das Agenten-Kontroll-Modul (7) den wenigstens einen von ihm vorgesehenen Nachbar-Detektions-Agenten (17) aktiviert, wobei die Aktivierung des wenigstens einen Nachbar-Detektions-Agenten (17) bevorzugt das Starten wenigstens eines Containers dieses umfasst, und der Container mit demjenigen Netzwerk-Namensraum (11-13) verbunden wird, der zu dem Netzwerk-Stack (8-10) gehört, dem die erfasste Schnittstelle (3) zugeordnet ist.

6. Verfahren nach Anspruch 4 oder 5,
**dadurch gekennzeichnet, dass**
dem Host-Netzwerknamensraum (8) und dem oder den weiteren Netzwerknamensräumen (9, 10) jeweils wenigstens ein von dem wenigstens einen Nachbar-Detektions-Agenten (17) verschiedener Prozess (16) und/oder Container (14) und/oder Pod (15) zugeordnet ist.

7. Verfahren nach einem der vorhergehenden Ansprüche,
**dadurch gekennzeichnet, dass**
der wenigstens eine Nachbar-Detektions-Agent (17) wenigstens eine virtuelle Netzwerkfunktion bereitstellt, und/oder wenigstens einen Prozess umfasst oder durch wenigstens einen Prozess gegeben ist.

8. Verfahren nach einem der vorhergehenden Ansprüche,
**dadurch gekennzeichnet, dass**
der wenigstens eine Nachbar-Detektions-Agent (17) wenigstens einen Service für andere, außerhalb des Arbeitsknotens (1) liegende Teilnehmer des Netzwerks umfasst oder durch wenigstens einen Service für andere, außerhalb des Arbeitsknotens (1) liegende Teilnehmer des Netzwerks gegeben ist.

9. Verfahren nach einem der vorhergehenden Ansprüche,
**dadurch gekennzeichnet, dass**
das Agenten-Kontroll-Modul (7) Hardware-Netzwerkschnittstellen und/oder virtuelle physikalische Netzwerkschnittstellen als physikalische Netzwerkschnittstellen (3) des Arbeitsknotens (1) erfasst.

10. Verfahren nach einem der vorhergehenden Ansprüche,
**dadurch gekennzeichnet, dass**
das Agenten-Kontroll-Modul (7) wenigstens einen Nachbar-Detektions-Agenten (17), den es für eine erfasste Schnittstelle (3) oder den zugehörigen Netzwerk-Stack (8-10) vorgesehen hat oder vorsieht, für die erfasste Schnittstelle (3) konfiguriert.

11. Verfahren nach einem der vorhergehenden Ansprüche,
**dadurch gekennzeichnet, dass**
das Agenten-Kontroll-Modul (7) für wenigstens eine erfasste Schnittstelle (3) eine eindeutige Identität festlegt.

12. Verfahren nach einem der vorhergehenden Ansprüche,
**dadurch gekennzeichnet, dass**
das Agenten-Kontroll-Modul (7) dem Host-Netzwerk-Stack (8) und dem oder den weiteren Netzwerk-Stacks (9, 10) zugeordnete Elemente, insbesondere Prozesse (16) und/oder Pods (15) und/oder Container (14) erfasst.

13. Verfahren nach Anspruch 12,
**dadurch gekennzeichnet, dass**
das Agenten-Kontroll-Modul (7) für den Fall, dass es erkennt, dass sämtliche einem Netzwerk-Stack (8-10) zugeordneten Elemente, insbesondere Prozesse (16) und/oder Pods (15) und/oder Container (14), mit Ausnahme wenigstens eines diesem zugeordneten Nachbar-Detektions-Agenten (17) beendet sind, den wenigstens einen Nachbar-Detektions-Agenten (17) entfernt.

14. Verfahren nach einem der vorhergehenden Ansprüche,
**dadurch gekennzeichnet, dass**
es sich bei dem Arbeitsknoten (1) um eine virtuelle Maschine oder ein Edge-Gerät handelt.

15. Verfahren nach einem der vorhergehenden Ansprüche,
**dadurch gekennzeichnet, dass**
das Agenten-Kontroll-Modul (7) vor dem Vorsehen des wenigstens einen Nachbar-Detektions-Agenten (17) prüft, ob für die erfasste Schnittstelle (3) oder den Netzwerk-Stack (8-10), zu welchem diese gehört, bereits wenigstens ein Nachbar-Detektions-Agent (17) vorgesehen ist, und das Agenten-Kontroll-Modul (7) nur für den Fall, dass dem nicht so ist, für die erfasste Schnittstelle (3) oder den zugehörigen Netzwerk-Stack (8-10) wenigstens einen Nachbar-Detektions-Agenten (17) vorsieht.

16. Verfahren nach einem der vorhergehenden Ansprüche,
**dadurch gekennzeichnet, dass**
das von dem wenigstens einen Nachbar-Detektions-Agenten (17) bereitgestellte Protokoll bzw. darüber ausgetauschte Informationen genutzt wird bzw. werden, um die Netzwerktopologie insbesondere zwischen dem Arbeitsknoten (1) und weiteren Teilnehmern des Netzwerkes, insbesondere weiteren Arbeitsknoten (1) des Clusters (2) zu ermitteln.

17. Cluster-Arbeitsknoten (1) zur Durchführung des Verfahrens nach einem der vorhergehenden Ansprüche, umfassend:
- einen Host-Netzwerk-Stack (8) und einen oder mehrere weitere Netzwerk-Stacks (9, 10),
- ein Agenten-Kontroll-Modul (7), das dazu ausgebildet und/oder eingerichtet ist, zu erfassen, welche physikalischen Netzwerkschnittstellen (3) der Arbeitsknoten (1) aufweist, wobei sowohl der Host-Netzwerk-Stack (8) als auch der oder die weiteren Netzwerk-Stacks (9, 10) auf das Vorhandensein von physikalischen Schnittstellen (3) überprüft werden, und um für den Fall, dass wenigstens eine physikalische Netzwerkschnittstelle (3) erstmalig erfasst oder von einem Netzwerk-Stack (8-10) entfernt und einem andern Netzwerk-Stack (8-10) zugeordnet wird, erfasste Schnittstelle (3), für die wenigstens eine erfasste Schnittstelle (3) oder für den Netzwerk-Stack (8-10), zu dem die wenigstens eine erfasste Schnittstelle (3) gehört, bei Bedarf automatisch wenigstens einen Nachbar-Detektions-Agenten (17) vorzusehen, der ausgebildet und/oder eingerichtet ist, um wenigstens ein Protokoll bereitzustellen, welches die Erfassung der Netzwerktopologie ermöglicht.

18. Cluster umfassend wenigsten einen Arbeitsknoten (1) nach Anspruch 17.

19. Netzwerk umfassend wenigsten einen Arbeitsknoten (1) nach Anspruch 17.

20. Computerprogramm umfassend Programmcode-Mittel, die bei der Ausführung des Programms auf wenigstens einem Computer den wenigstens einen Computer veranlassen, die Schritte der Verfahrens nach einem der Ansprüche 1 bis 16 durchzuführen.

21. Computerlesbares Medium, das Instruktionen umfasst, die, wenn sie auf wenigstens einem Computer ausgeführt werden, den wenigstens einen Computer veranlassen, die Schritte des Verfahrens nach einem der Ansprüche 1 bis 16 durchzuführen.
